# EUROPEAN PATENT APPLICATION

(11) **EP 1 705 931 A1**
(43) Date of publication of application: **27.09.2006**
(21) Application number: 06111720.6
(22) Date of filing: 24.03.2006
(51) Int. Cl.: H04Q 3/00, H04M 7/00

(54) **Method and apparatus for processing a call from an endpoint device in a packet network**

(30) Priority: 25.03.2005 US 89776
(71) Applicant: AT&T Corp., New York, NY 10013-2412 (US)
(72) Inventor: Croak, Marian, Fair Haven, NJ 07704 (US); Eslambolchi, Hossein, Los Altos Hills, CA 94022 (US)
(74) Representative: Asquith, Julian Peter

(57) **Abstract**

Method and apparatus for processing a call form an endpoint device (122,134,144) in a packet network is described. In one example, a dialed number associated with the call is identified (304). For example, the dialed number may be identified using a dialed number identification service DNIS. A current number of calls established by the packet network for the dialed number is determined (306). The current number of calls is compared to a threshold number of calls for the dialed number (308). At least one announcement associated with the dialed number is sent to the endpoint device in response to the current number of calls exceeding the threshold number of calls (312).

## Description

### BACKGROUND OF THE INVENTION

### Field of the Invention

Embodiments of the present invention generally relate to telecommunications systems and, more particularly, to a method and apparatus for processing a call from an endpoint device in a packet network.

### Description of the Related Art

Generally, telecommunications systems provide the ability for two or more people or machines (e.g., computerized or other electronic devices) to communicate with each other. A telecommunications system may include various networks for facilitating communication that may be generally organized into packet networks and circuit-switched networks. Exemplary packet networks include internet protocol (IP) networks, asynchronous transfer mode (ATM) networks, frame-relay networks, and the like. An exemplary circuit-switched network includes a plain old telephone system (POTS), such as the publicly switched telephone network (PSTN).

Enterprises typically make use of a call center to handle calls from customers. A "call center" includes agents, automatic call distributors, and servers for handling the calls. Most often, a customer reaches a call center by dialing a toll-free number (e.g., an 800 number) associated with a particular enterprise. In some cases, a call center may experience congestion resulting in excessively long queues of calls to be handled and increased holding time costs. Presently, in response to such congestion, call centers "busy out" their ports to prevent additional incoming calls (i.e., a customer receives a busy signal instead of being placed in a call queue). However, customers receiving busy signals may become dissatisfied, resulting in lost sales to the enterprise.

### SUMMARY OF THE INVENTION

Method and apparatus for processing a call form an endpoint device in a packet network is described. In one embodiment, a dialed number associated with the call is identified. For example, the dialed number may be identified using a dialed number identification service (DNIS). A current number of calls established by the packet network for the dialed number is determined. The current number of calls is compared to a threshold number of calls for the dialed number. At least one announcement associated with the dialed number is sent to the endpoint device in response to the current number of calls exceeding the threshold number of calls.

### BRIEF DESCRIPTION OF THE DRAWINGS

So that the manner in which the above recited features of the present invention can be understood in detail, a more particular description of the invention, briefly summarized above, may be had by reference to embodiments, some of which are illustrated in the appended drawings. It is to be noted, however, that the appended drawings illustrate only typical embodiments of this invention and are therefore not to be considered limiting of its scope, for the invention may admit to other equally effective embodiments.

FIG. 1 is a block diagram depicting an exemplary embodiment of a communication system in accordance with the invention;

FIG. 2 is a block diagram depicting an exemplary configuration of the communication system of FIG. 1 in accordance with the invention;

FIG. 3 is a flow diagram depicting an exemplary embodiment of a method for processing a call from an endpoint device in a packet network in accordance with the invention; and

FIG. 4 is a block diagram depicting an exemplary embodiment of a computer suitable for implementing the processes and methods described herein.

### DETAILED DESCRIPTION

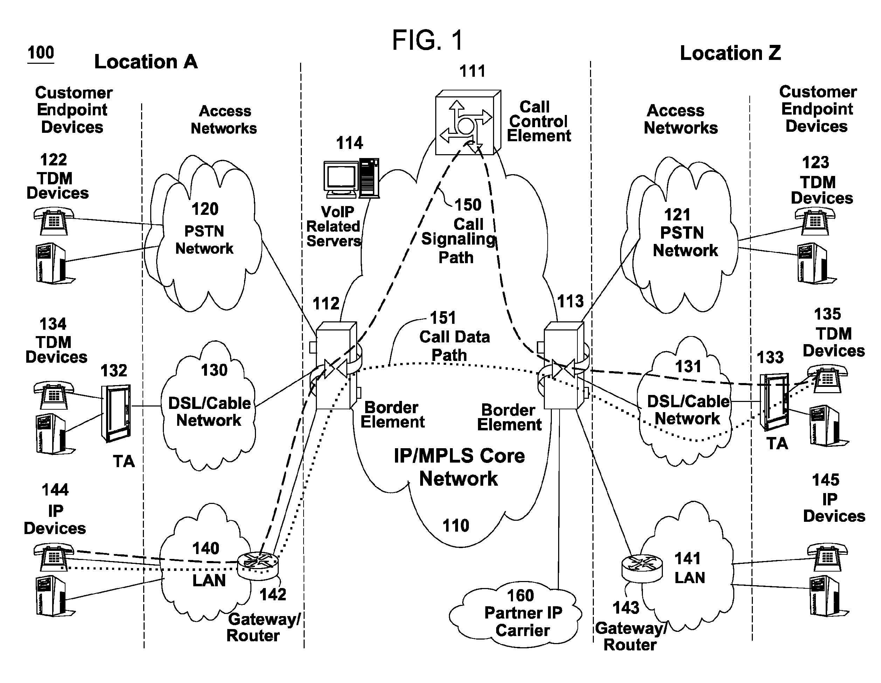

To better understand the present invention, FIG. 1 illustrates an example network, e.g., a packet network such as a voice over internet protocol (VolP) network related to the present invention. Exemplary packet networks include internet protocol (IP) networks, asynchronous transfer mode (ATM) networks, frame-relay networks, and the like. An IP network is broadly defined as a network that uses Internet Protocol to exchange data packets. Thus, a VolP network or a SolP (Service over Internet Protocol) network is considered an IP network.

In one embodiment, the VolP network may comprise various types of customer endpoint devices connected via various types of access networks to a carrier (a service provider) VolP core infrastructure over an Internet Protocol/Multi-Protocol Label Switching (IP/MPLS) based core backbone network. Broadly defined, a VolP network is a network that is capable of carrying voice signals as packetized data over an IP network. The present invention is described below in the context of an illustrative VolP network. Thus, the present invention should not be interpreted to be limited by this particular illustrative architecture.

Referring to FIG. 1, the customer endpoint devices can be either Time Division Multiplexing (TDM) based or IP based. TDM based customer endpoint devices 122, 123, 134, and 135 typically comprise of TDM phones or Private Branch Exchange (PBX). IP based customer endpoint devices 144 and145 typically comprise IP phones or PBX. The Terminal Adaptors (TA) 132 and 133 are used to provide necessary interworking functions between TDM customer endpoint devices, such as analog phones, and packet based access network technologies, such as Digital Subscriber Loop (DSL) or Cable broadband access networks. TDM based customer endpoint devices access VolP services by using either a Public Switched Telephone Network (PSTN) 120, 121 or a broadband access network via a TA 132 or 133. IP based customer endpoint devices access VolP services by using a Local Area Network (LAN) 140 and 141 with a VolP gateway or router 142 and 143, respectively.

The access networks can be either TDM or packet based. A TDM PSTN 120 or 121 is used to support TDM customer endpoint devices connected via traditional phone lines. A packet based access network, such as Frame Relay, ATM, Ethernet or IP, is used to support IP based customer endpoint devices via a customer LAN, e.g., 140 with a VolP gateway and router 142. A packet based access network 130 or 131, such as DSL or Cable, when used together with a TA 132 or 133, is used to support TDM based customer endpoint devices.

The core VolP infrastructure comprises of several key VolP components, such the Border Element (BE) 112 and 113, the Call Control Element (CCE) 111, and VolP related servers 114. The BE resides at the edge of the VolP core infrastructure and interfaces with customers endpoints over various types of access networks. BEs may also be referred to as "edge components." A BE is typically implemented as a Media Gateway and performs signaling, media control, security, and call admission control and related functions. The CCE resides within the VolP infrastructure and is connected to the BEs using the Session Initiation Protocol (SIP) over the underlying IP/MPLS based core backbone network 110. The CCE is typically implemented as a Media Gateway Controller and performs network wide call control related functions as well as interacts with the appropriate VolP service related servers when necessary. The CCE functions as a SIP back-to-back user agent and is a signaling endpoint for all call legs between all BEs and the CCE. The CCE may need to interact with various VolP related servers in order to complete a call that require certain service specific features, e.g. translation of an E.164 voice network address into an IP address.

For calls that originate or terminate in a different carrier, they can be handled through the PSTN 120 and 121 or the Partner IP Carrier 160 interconnections. For originating or terminating TDM calls, they can be handled via existing PSTN interconnections to the other carrier. For originating or terminating VolP calls, they can be handled via the Partner IP carrier interface 160 to the other carrier.

In order to illustrate how the different components operate to support a VolP call, the following call scenario is used to illustrate how a VolP call is setup between two customer endpoints. A customer using IP device 144 at location A places a call to another customer at location Z using TDM device 135. During the call setup, a setup signaling message is sent from IP device 144, through the LAN 140, the VolP Gateway/Router 142, and the associated packet based access network, to BE 112. BE 112 will then send a setup signaling message, such as a SIP-INVITE message if SIP is used, to CCE 111. CCE 111 looks at the called party information and queries the necessary VolP service related server 114 to obtain the information to complete this call. If BE 113 needs to be involved in completing the call; CCE 111 sends another call setup message, such as a SIP-INVITE message if SIP is used, to BE 113. Upon receiving the call setup message, BE 113 forwards the call setup message, via broadband network 131, to TA 133. TA 133 then identifies the appropriate TDM device 135 and rings that device. Once the call is accepted at location Z by the called party, a call acknowledgement signaling message, such as a SIP-ACK message if SIP is used, is sent in the reverse direction back to the CCE 111. After the CCE 111 receives the call acknowledgement message, it will then send a call acknowledgement signaling message, such as a SIP-ACK message if SIP is used, toward the calling party. In addition, the CCE 111 also provides the necessary information of the call to both BE 112 and BE 113 so that the call data exchange can proceed directly between BE 112 and BE 113. The call signaling path 150 and the call data path 151 are illustratively shown in FIG. 1. Note that the call signaling path and the call data path are different because once a call has been setup up between two endpoints, the CCE 111 does not need to be in the data path for actual direct data exchange.

Note that a customer in location A using any endpoint device type with its associated access network type can communicate with another customer in location Z using any endpoint device type with its associated network type as well. For instance, a customer at location A using IP customer endpoint device 144 with packet based access network 140 can call another customer at location Z using TDM endpoint device 123 with PSTN access network 121. The BEs 112 and 113 are responsible for the necessary signaling protocol translation, e.g., SS7 to and from SIP, and media format conversion, such as TDM voice format to and from IP based packet voice format.

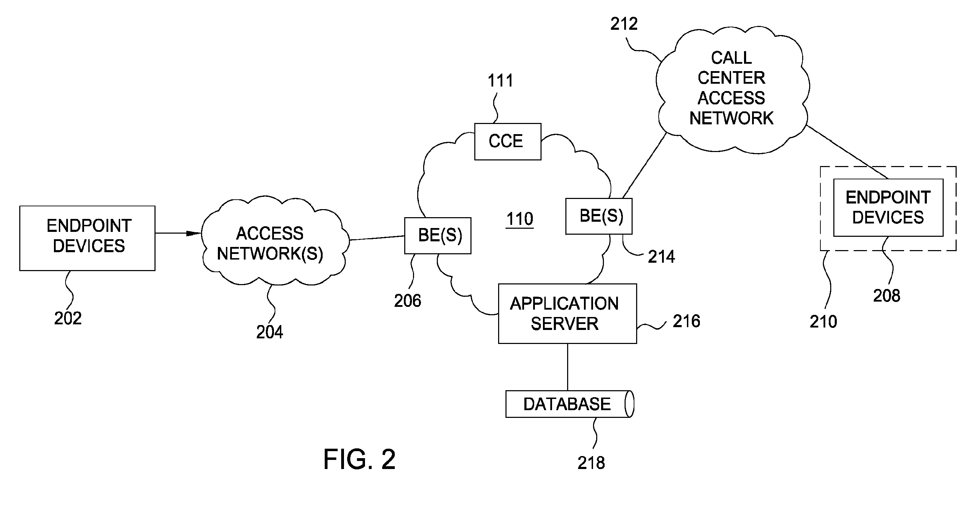

FIG. 2 is a block diagram depicting an exemplary configuration of the communication system of FIG. 1 in accordance with the invention. In the present embodiment, originating endpoint devices 202 are in communication with the core network 110 through one or more access networks 204 and one or more BEs 206. Terminating endpoint devices 208 located in a call center 210 are in communication with the core network 110 through a call center access network 212 and one or more BEs 214. The originating endpoint devices 202 and the terminating endpoint devices 208 may comprise any of the customer endpoint devices described above (e.g., TDM devices, IP devices, etc.). The access networks 204 and 212 may comprise any of the access networks described above (e.g., PSTN, DSL/Cable, LAN, etc).

The call center 210 is configured to handle incoming calls from the endpoint devices 202 directed to one or more dialed numbers (e.g., 800 numbers). For each incoming call, the network 110 detects a dialed number associated with the call. In one embodiment, the dialed number of a call is determined using the dialed number identification service (DNIS). The network 110 may be configured to detect the dialed number of the call at the BEs 206, the CCE 111, the BEs 214, or any combination of such elements. In any case, the detecting network element queries an application server 216 with the dialed number of the call. The application server 216 determines the current number of calls established in the network 110 for the dialed number. Alternatively, the detecting network element may keep track of the current number of established calls for the dialed number and may send such information to the application server 216.

The application server 216 identifies a threshold number of calls associated with the dialed number. Thresholds for various dialed numbers may be stored in a database 218 coupled to the application server 216. The thresholds may be set for each dialed number that is handled by the call center 210. If the current number of calls is less than the threshold, the application server 216 instructs the detecting network element to proceed with the call setup process described above.

If the current number of calls exceeds the threshold, the application server 216 identifies one or more announcements associated with the dialed number. Announcements for various dialed numbers may be stored in the database 218. The announcements may be configured for each dialed number that is handled by the call center 210. The application server 216 instructs the detecting network element to send the announcement(s) to the originating endpoint device for the call. The announcement(s) may comprise one or more of a specified time to retry the call, another number to dial to complete the call, a uniform resource locator (URL) associated with the Internet, and like type alternative means for reaching the enterprise associated with the called number. The announcement(s) may comprise one or more of a voice announcement, a textual announcement, a graphical announcement (e.g., an icon or the like for display on a graphical interface), and the like. Sending announcement(s), rather than busy tones, may increase customer satisfaction when the call center 210 experiences excessive call volume such that incoming calls are blocked.

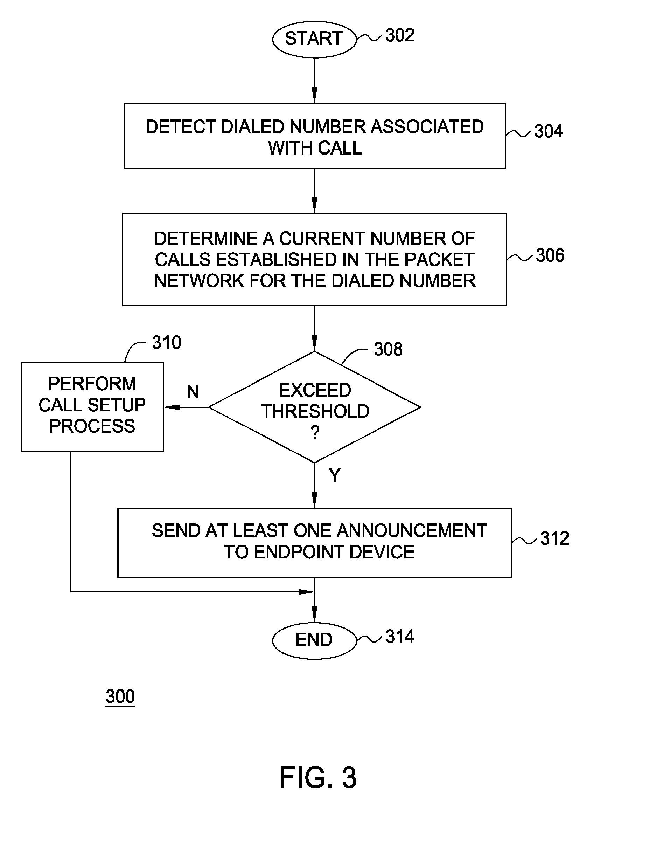

FIG. 3 is a flow diagram depicting an exemplary embodiment of a method 300 for processing a call from an endpoint device in a packet network in accordance with the invention. The method 300 begins at step 302. At step 304, a dialed number associated with the call is detected. For example, the dialed number may be detected using DNIS. At step 306, a current number of calls established in the packet network for the dialed number is determined. At step 308, a determination is made whether the current number of calls exceeds a threshold number of calls for the dialed number. If not, the method 300 proceeds to step 310, where the call setup process is performed. The method 300 then ends at step 314. If the current number of calls exceeds the threshold, the method 300 proceeds to step 312. At step 312, at least one announcement associated with the dialed number is sent to the endpoint device. The at least one announcement may comprise a voice, text, and/or graphical message that encourages the caller to disconnect and either call back at some specified time, visit a URL on the Internet for faster service, and/or call another number, for example. The method 300 ends at step 314.

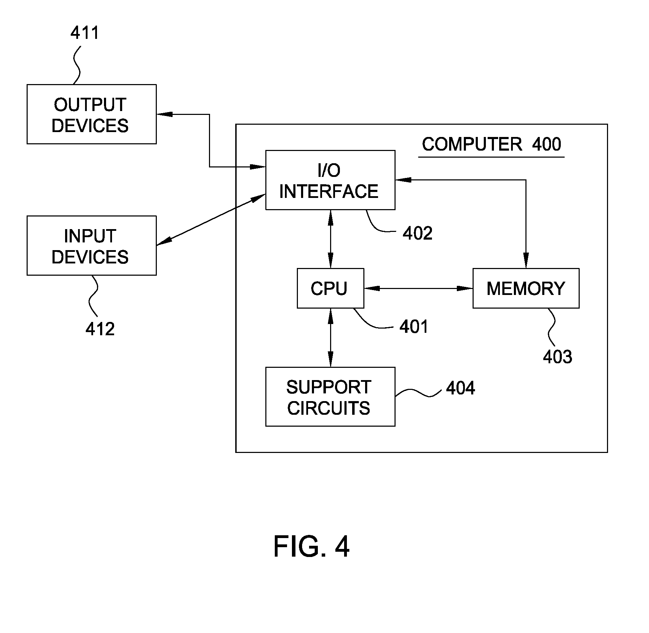

FIG. 4 is a block diagram depicting an exemplary embodiment of a computer 400 suitable for implementing the processes and methods described herein. The computer 400 includes a central processing unit (CPU) 401, a memory 403, various support circuits 404, and an I/O interface 402. The CPU 401 may be any type of microprocessor known in the art. The support circuits 404 for the CPU 401 include conventional cache, power supplies, clock circuits, data registers, I/O interfaces, and the like. The I/O interface 402 may be directly coupled to the memory 403 or coupled through the CPU 401. The I/O interface 402 may be coupled to various input devices 412 and output devices 411, such as a conventional keyboard, mouse, printer, display, and the like.

The memory 403 may store all or portions of one or more programs and/or data to implement the processes and methods described herein. Although one or more aspects of the invention are disclosed as being implemented as a computer executing a software program, those skilled in the art will appreciate that the invention may be implemented in hardware, software, or a combination of hardware and software. Such implementations may include a number of processors independently executing various programs and dedicated hardware, such as ASICs.

The computer 400 may be programmed with an operating system, which may be OS/2, Java Virtual Machine, Linux, Solaris, Unix, Windows, Windows95, Windows98, Windows NT, and Windows2000, WindowsME, and WindowsXP, among other known platforms. At least a portion of an operating system may be disposed in the memory 403. The memory 403 may include one or more of the following random access memory, read only memory, magneto-resistive read/write memory, optical read/write memory, cache memory, magnetic read/write memory, and the like, as well as signal-bearing media as described below.

An aspect of the invention is implemented as a program product for use with a computer system. Program(s) of the program product defines functions of embodiments and can be contained on a variety of signal-bearing media, which include, but are not limited to: (i) information permanently stored on non-writable storage media (e.g., read-only memory devices within a computer such as CD-ROM or DVD-ROM disks readable by a CD-ROM drive or a DVD drive); (ii) alterable information stored on writable storage media (e.g., floppy disks within a diskette drive or hard-disk drive or read/writable CD or read/writable DVD); or (iii) information conveyed to a computer by a communications medium, such as through a computer or telephone network, including wireless communications. The latter embodiment specifically includes information downloaded from the Internet and other networks. Such signal-bearing media, when carrying computer-readable instructions that direct functions of the invention, represent embodiments of the invention.

While the foregoing is directed to embodiments of the present invention, other and further embodiments of the invention may be devised without departing from the basic scope thereof, and the scope thereof is determined by the claims that follow.

## Claims

1. In a packet network, a method of processing a call from an endpoint device, comprising:
detecting a dialed number associated with the call;
determining a current number of calls established through the packet network for the dialed number;
comparing the current number of calls to a threshold number of calls for the dialed number; and
sending at least one announcement associated the dialed number to the endpoint device in response to the current number of calls exceeding the threshold number of calls.

2. The method of claim 1, wherein the dialed number is detected at an edge component of the packet network.

3. The method of claim 1, wherein the dialed number is detected at a call control element of the packet network.

4. The method of claim 1, wherein the dialed number is detected using a dialed number identification service (DNIS).

5. The method of claim 1, wherein the at least one announcement comprises at least one of: a specified time to retry the call, another number to dial to complete the call, and a universal resource locator (URL).

6. The method of claim 1, wherein the at least one announcement comprises at least one of: a voice announcement, a textual announcement, and a graphical announcement.

7. The method of claim 1, wherein the packet network comprises a voice-over-internet protocol (VOIP) network.

8. In a packet network, apparatus for processing a call from an endpoint device, comprising:
means for detecting a dialed number associated with the call;
means for determining a current number of calls established through the packet network for the dialed number;
means for comparing the current number of calls to a threshold number of calls for the dialed number; and
means for sending at least one announcement associated the dialed number to the endpoint device in response to the current number of calls exceeding the threshold number of calls.

9. The apparatus of claim 8, wherein the means for detected is disposed at an edge component of the packet network.

10. The apparatus of claim 8, wherein the dialed number is detected at a call control element of the packet network.

11. The apparatus of claim 8, wherein the means for detected employs a dialed number identification service (DNIS) to detect the dialed number.

12. The apparatus of claim 8, wherein the at least one announcement comprises at least one of: a specified time to retry the call, another number to dial to complete the call, and a universal resource locator (URL).

13. The apparatus of claim 8, wherein the at least one announcement comprises at least one of: a voice announcement, a textual announcement, and a graphical announcement.

14. The apparatus of claim 8, wherein the packet network comprises a voice-over-internet protocol (VOIP) network.

15. A computer readable medium having stored thereon instructions that, when executed by a processor, cause the processor to perform a method of processing a call from an endpoint device in a packet network, comprising:
detecting a dialed number associated with the call;
determining a current number of calls established through the packet network for the dialed number;
comparing the current number of calls to a threshold number of calls for the dialed number; and
sending at least one announcement associated the dialed number to the endpoint device in response to the current number of calls exceeding the threshold number of calls.

16. The computer readable medium of claim 15, wherein the dialed number is detected at one or more of an edge component and a call control element of the packet network.

17. The computer readable medium of claim 15, wherein the dialed number is detected using a dialed number identification service (DNIS).

18. The computer readable medium of claim 15, wherein the at least one announcement comprises at least one of: a specified time to retry the call, another number to dial to complete the call, and a universal resource locator (URL).

19. The computer readable medium of claim 15, wherein the at least one announcement comprises at least one of: a voice announcement, a textual announcement, and a graphical announcement.

20. The computer readable medium of claim 15, wherein the packet network comprises a voice-over-internet protocol (VOIP) network.
